(19) Europäisches Patentamt
European Patent Office
Office européen des brevets

(11) **EP 2 710 328 B1**

(12) **EUROPÄISCHE PATENTSCHRIFT**

(45) Veröffentlichungstag und Bekanntmachung des Hinweises auf die Patenterteilung:
**08.07.2015   Patentblatt 2015/28**

(21) Anmeldenummer: **12721764.4**

(22) Anmeldetag: **10.05.2012**

(51) Int Cl.:
*G01B 11/16* (2006.01)      *G01L 1/25* (2006.01)
*B82Y 15/00* (2011.01)

(86) Internationale Anmeldenummer:
**PCT/EP2012/002015**

(87) Internationale Veröffentlichungsnummer:
**WO 2012/156050 (22.11.2012 Gazette 2012/47)**

(54) **VORRICHTUNG UND VERFAHREN ZUR DETEKTION DER AUSLENKUNG ELASTISCHER ELEMENTE**

APPARATUS AND METHOD FOR DETECTING THE DEFLECTION OF ELASTIC ELEMENTS

DISPOSITIF ET PROCÉDÉ DE DÉTECTION DE LA DÉVIATION D'ÉLÉMENTS ÉLASTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.05.2011   DE 102011050493**

(43) Veröffentlichungstag der Anmeldung:
**26.03.2014   Patentblatt 2014/13**

(73) Patentinhaber: **Ludwig-Maximilians-Universität München**
**80539 München (DE)**

(72) Erfinder: **PAULITSCHKE, Philipp**
**81371 München (DE)**

(74) Vertreter: **Lucke, Andreas**
**Boehmert & Boehmert**
**Anwaltspartnerschaft mbB**
**Patentanwälte Rechtsanwälte**
**Pettenkoferstrasse 20-22**
**80336 München (DE)**

(56) Entgegenhaltungen:
**US-A- 3 458 257      US-A- 3 628 866**

• **O. DU ROURE: "Force mapping in epithelial cell migration", PROCEEDINGS OF THE NATIONAL ACADEMY OF SCIENCES, Bd. 102, Nr. 7, 1. Januar 2005 (2005-01-01), Seiten 2390-2395, XP55001313, ISSN: 0027-8424, DOI: 10.1073/pnas.0408482102 in der Anmeldung erwähnt**

**Beschreibung**

GEBIET DER ERFINDUNG

Die vorliegende Erfindung liegt auf dem Gebiet der Mikro- oder Nanosensorik. Genauer betrifft die Erfindung eine Vorrichtung und ein Verfahren zur Detektion der Auslenkung einer Vielzahl mikro- oder nanoskopischer elastischer Elemente sowie einen Kraftsensor und einen Massensensor.

HINTERGRUND DER ERFINDUNG UND VERWANDTER STAND DER TECHNIK

Aus dem Stand der Technik sind Sensoren mit mikroskopischen oder nanoskopischen elastischen Elementen bekannt, mit denen sich kleinste Kräfte oder Resonanzen bis in den GHz-Bereich messen lassen.

Wenn die elastischen Elemente als Resonatoren ausgebildet sind, können sie als Massedetektor verwendet werden. Das Detektionsprinzip beruht auf der Detektion einer Verschiebung der Resonanzfrequenz, wenn sich Partikel an dem Resonator ablagern. Das Ausmaß der Verschiebung ist ein Maß für die Masse des angelagerten Partikels. Aufgrund der extrem kleinen Abmessungen der gegenwärtig herstellbaren Resonatoren führen bereit kleinste Massenanlagerungen zu einer messbaren Verschiebung der Resonanzfrequenz, sodass mittlerweile sogar die Ablagerung einzelner Atome gemessen werden kann, s. *"An atomic-resolution nanome-chanical mass sensor* ", K. Jensen, Nature Nanotechnology, 3, 533, 2008.

Allerdings werden für derartige Sensoren geeignete Auslesemethoden benötigt, mit denen die Auslenkung der elastischen Elemente gemessen werden kann. Für einseitig eingespannte Resonatoren, wie sie beispielsweise im Rasterkraftmikroskop (AFM) eingesetzt werden, wird beispielsweise die Ablenkung eines Laserstrahls in Totalreflexion vom AFM-Balken, dem sogenannten Cantilever gemessen. Diese Art der Detektion der Auslenkung wird hier als "externe Detektion" bezeichnet, da die Detektionsvorrichtung, nämlich die Beleuchtungsquelle und der optische Detektor zum Empfangen des reflektierten Lichtes, von dem eigentlichen Sensor baulich getrennt ist.

Alternativ hierzu sind sogenannte interne Detektionsmethoden bekannt, die auch als "On-Chip"-Methoden bezeichnet werden und bei denen ein integrierter Spannungssensor auf dem Cantilever die Bewegung bzw. Verformung des Cantilevers erfasst, s. "A Review of Micro-cantilevers for Sensing Applications", S. Vashist, A. Zojono, 2007, Medical News TODAY, June 24, 2007.

Die Abmessungen gebräuchlicher Cantilever liegen im Mikrometer-Bereich. Wenn der Sensor jedoch weiter in den Nanometer-Bereich verkleinert werden soll, ist eine Reflexionsmessung des Laserstrahls am Cantilever praktisch nicht mehr möglich, und dem Fachmann bleibt nur noch die Möglichkeit der elektronischen On-Chip-Detektion, die eine aufwendige und teure Ausleseelektronik erforderlich macht. Damit muss aber ein wesentlicher Vorteil der externen Detektion preisgegeben werden, nämlich dass die Sensoren, die einem Verschleiß unterworfen sind, bei einem Aufbau mit externer Detektion einfach ausgewechselt werden können, die Detektionsvorrichtung selbst hingegen beibehalten werden kann.

Eine weitere Klasse von Sensoren, bei denen die Auslenkung mikroskopischer bzw. nanoskopischer elastischer Elemente detektiert wird, sind Zellkraftsensoren, mit denen die Kräfte gemessen werden sollen, die von biologischen Zellen ausgeübt werden. Aus *Olivia du* Roure et al., "Force mapping in epithelial cell migration", Proceedings of the National Academy of Sciences of the United States of America, 102(7):2390-2395, 2005, ist ein derartiger Kraftsensor bekannt. Der Kraftsensor umfasst eine Vielzahl von vertikalen Säulen, die mit einem unteren Ende an einem horizontalen Substrat befestigt sind und ein oberes freies Ende aufweisen. Die Säulen und das Substrat bestehen aus Polydimethylsiloxan (PDMS), d. h. einem Elastomermaterial. Während der Kraftmessungen befinden sich die Zellen auf den Oberflächen mehrerer benachbarter Säulen. Die von den Zellen ausgeübten Kräfte führen zu einer Auslenkung der Säulen aus ihrer Ruhelage, die optisch detektiert werden kann. Bei bekannter Federkonstante der Säulen kann dann aus der Auslenkung auf die Zellkraft zurückgeschlossen werden.

Auch bei dieser Art Sensor setzt die gegenwärtig bekannte Art der Detektion der Auslenkung der elastischen Elemente der Miniaturisierung Grenzen, da die optische Auflösung eines typischerweise verwendeten Mikroskops durch Beugungseffekte begrenzt ist.

Ferner ist es mit gegenwärtigen Kraftsensoren unter praktischen Gesichtspunkten schwer möglich, die Zellkräfte von mehr als einigen wenigen Zellen gleichzeitig zu erfassen. Dies bedeutet, dass es mit den gegenwärtig verfügbaren Verfahren und Vorrichtungen sehr aufwendig ist, aussagekräftige Statistiken über Zellkräfte zu erhalten.

Zusammenfassend ist also festzustellen, dass sowohl im Falle der beschriebenen Massensensoren als auch der Kraftsensoren die Detektion der Auslenkung der elastischen Elemente umso schwieriger wird, je weiter die elastischen Elemente miniaturisiert sind und je größer die Anzahl der elastischen Elemente ist, deren Auslenkung detektiert werden soll.

ZUSAMMENFASSUNG DER ERFINDUNG

Der Erfindung liegt daher die Aufgabe zugrunde, ein Verfahren und eine Vorrichtung zur Detektion der Auslenkung einer Mehrzahl elastischer Elemente anzugeben, die eine weitere Miniaturisierung und Erhöhung der Anzahl elastischer Element mit möglichst geringem Aufwand gestattet.

Diese Aufgabe wird durch ein Verfahren nach Anspruch 1 und eine Vorrichtung nach Anspruch 11 gelöst. Ferner werden eine Einrichtung zum Ermitteln von Zellkräften und eine Einrichtung zur Detektion der Masse und/oder Konzentration von Partikeln beschrieben, die sich einer erfindungsgemäßen Vorrichtung bedienen. Vorteilhafte Weiterbildungen sind in den abhängigen Ansprüchen angegeben.

Das erfindungsgemäße Verfahren gestattet die Detektion der Auslenkung einer Mehrzahl elastischer Elemente, die periodisch angeordnet sind und die gegen eine Rückstellkraft aus einer Ruhelage auslenkbar sind. Bei dem erfindungsgemäßen Verfahren wird diese Anordnung der elastischen Elemente mit Licht beleuchtet, dessen Kohärenzlänge größer ist als der mittlere Abstand benachbarter elastischer Elemente. Ein Beugungsbild des an der Anordnung von elastischen Elementen gestreuten Beleuchtungslichtes wird erzeugt, und zumindest ein Teil des Beugungsbildes wird direkt - oder nach Wechselwirkung mit weiteren optischen Komponenten - von einem optischen Sensor detektiert. Das detektierte Bild, Bildsignal oder Messsignal wird analysiert, um daraus Informationen bezüglich des Auslenkungszustandes der elastischen Elemente zu ermitteln.

Anders als beim beschriebenen Stand der Technik, bei dem beispielsweise ein normales optisches Reflexionsbild der Säulenköpfe eines Kraftsensors oder die Ablenkung eines von einem Cantilever reflektierten Laserstrahls detektiert wurde, wird bei dem erfindungsgemäßen Verfahren ein Beugungsbild der Vielzahl von elastischen Elementen erzeugt.

Wie eingangs erwähnt, widmet sich das erfindungsgemäße Verfahren speziell der Detektion der Auslenkung von mikroskopischen oder nanoskopischen elastischen Elementen, d. h. Elementen, deren geringste Abmessung beispielsweise weniger als 10 $\mu$m beträgt, in vielen Fällen sogar im Bereich von einigen 100 nm oder darunter liegen wird. Da die elastischen Elemente periodisch angeordnet sind, bilden sie eine Art Bragg-Gitter, an dem das Beleuchtungslicht gestreut werden kann. In diesem Fall enthält das Beugungsbild Bragg-Reflexe zumindest erster Ordnung.

Ferner ist zu beachten, dass die Lichtquelle zur Beleuchtung und der optische Sensor makroskopische Komponenten sind und typischerweise in einer makroskopischen Entfernung von der Anordnung elastischer Elemente angeordnet ist. Somit ist klar, dass das der Detektion zugrundeliegende Beugungsbild dem Fernfeld des gebeugten Lichtes entspricht, d. h. einem sogenannten Fraunhofer-Beugungsmuster, das der Fouriertransformierten des beugenden Objekts entspricht. Um in guter Näherung von einem Fraunhofer-Beugungsmuster ausgehen zu können, reicht es typischerweise, wenn die Entfernung zwischen der Anordnung elastischer Elemente und dem optischen Sensor im zweistelligen Mikrometerbereich liegt, was in praktischen Anwendungen gegeben sein wird. Vereinfacht ausgedrückt basiert das Detektionsverfahren der Erfindung in gewisser Weise darauf, dass die Detektion der Auslenkung nicht im Realraum, sondern im Fourierraum durchgeführt wird.

Die Detektion im Fourierraum hat eine Reihe sehr wesentlicher Vorteile. Ein Vorteil besteht darin, dass die Miniaturisierung und die erhöhte Integration, d. h. die erhöhte Anzahl elastischer Elemente die Detektion nicht schwieriger oder aufwendiger macht, sondern in vielerlei Hinsicht sogar einfacher, wie unten näher erläutert wird. Insbesondere kann durch die Verwendung eines Beugungsbildes selbst bei extrem kleinen Strukturen eine externe Detektion beibehalten werden, d. h. die Detektionsvorrichtung ist nicht integraler Bestandteil der Anordnung elastischer Elemente. Dies ist von außerordentlich großem Vorteil, weil auf diese Weise Sensoren, die sich derartiger elastischer Elemente bedienen, wie beispielsweise Kraftsensoren oder Massensensoren einfach und kostengünstig ausgetauscht werden können, ohne dass die Detektionseinrichtung davon berührt würde.

Ein weiterer besonderer Vorteil besteht darin, dass bestimmte statistische Eigenschaften der Auslenkung einer Vielzahl von elastischen Elementen im Fourierraum wesentlich einfacher ermittelt werden können, und in einem weiter unten beschriebenen Fall sogar mit einer einfachen Intensitätsmessung erfasst werden können.

In einer vorteilhaften Ausführungsform werden die elastischen Elemente durch säulenförmige Elemente gebildet, die jeweils mit einem unteren Ende an einem Substrat befestigt sind und ein oberes freies Ende haben. In diesem Fall wird das genannte Beugungsbild durch das an den oberen Enden der säulenförmigen Elemente gestreute Licht gebildet. Eine derartige Anordnung von elastischen Säulen ist im Stand der Technik als Kraftsensor bekannt, mit dem beispielsweise Kräfte von biologischen Zellen untersucht wurden. Allerdings wurden dabei die Auslenkungen der einzelnen Säulen typischerweise mit Hilfe eines herkömmlichen Mikroskops beobachtet. Dies bedeutet, dass der Analyseaufwand mit zunehmender Zahl an Säulen ansteigt, und dass der Miniaturisierung durch Beugungseffekte Grenzen gesetzt werden. Diese Schwierigkeiten bestehen im Zusammenhang mit dem Detektionsverfahren der vorliegenden Erfindung nicht. Ferner kann ein ähnliches Sensor-Design auch als Massensensor verwendet werden, wie unten näher beschrieben wird.

In einer vorteilhaften Ausführungsform wird die Intensität von mindestens einem Bragg-Reflex mindestens erster Ordnung ermittelt und verwendet, um die mittlere Auslenkung der elastischen Elemente abzuschätzen. Der Begriff "abschätzen" ist hierbei weit zu verstehen und schließt sowohl eine konkrete Messung als auch eine qualitative Abschätzung, beispielsweise ob ein Grenzwert überschritten wird, oder ähnliches ein. Wie unten näher erläutert wird, sinkt die Intensität eines Bragg-Reflexes ab, wenn die streuenden Elemente, in diesem Fall die elastischen Elemente, aus ihrer periodischen Ruhelage ausgelenkt werden. Insofern ist die Intensität eines Bragg-Reflexes ein Maß für eine mittlere Auslenkung der elastischen Elemente. Dies bedeutet, dass durch eine einzige Intensitätsmessung an einem vorbestimmten Bragg-Reflex unmittelbar festgestellt werden kann, wie weit die elastischen Elemente im Mittel aus ihrer Ruhelage ausgelenkt sind. In vielen Anwendungen ist genau diese Information von Interesse.

Dies ist beispielsweise bei einem Kraftsensor mit säulenförmigen Elementen der Fall, zwischen denen oder auf deren oberen Enden sich biologische Zellen befinden. Die Zellen können Kräfte auf die säulenförmigen Elemente ausüben und diese dadurch aus ihrer Ruhelage verkippen, und die zugrundeliegende Kraft kann durch die Detektion der Auslenkung der jeweiligen Säule rekonstruiert werden. Wenn aber nicht das Verhalten einer einzelnen Zelle, sondern ein statistisches Verhalten von Interesse ist, beispielsweise um die mittlere Aktivität oder Vitalität von Zellen unter bestimmten Bedingungen zu ermitteln, vervielfacht sich der Detektions- und Analyseaufwand proportional mit der Größe des statistischen Ensembles.

Mit dem Detektionsverfahren der Erfindung hingegen kann über die Intensität eines bestimmten Bragg-Reflexes direkt die mittlere Auslenkung der elastischen Elemente abgeschätzt werden, die ihrerseits ein Maß für die Aktivität und Vitalität der Zellen ist. Eine sehr vielversprechende Anwendung hierfür besteht darin, die Wirkung von bestimmten Medikamenten bzw. pharmazeutischen Wirkstoffen auf Zellen zu untersuchen. Mit dem Detektionsverfahren der Erfindung kann beispielsweise nach Zugabe eines Medikamentes bzw. eines pharmazeutischen Wirkstoffs sehr einfach festgestellt werden, ob die Aktivität oder Vitalität durch die Zugabe zunimmt, gleich bleibt oder abnimmt. Ein Vorteil dieses Detektionsverfahrens besteht darin, dass es an einen hochintegrierten Kraftsensor mit tausenden von Säulen und einer großen Zahl von Zellen gleichzeitig durchgeführt werden kann, und somit ein statistisch aussagekräftiges Verhalten mit einer einzigen Intensitätsmessung detektiert werden kann. Tatsächlich nimmt die Genauigkeit der Detektion über die Intensität einzelner Bragg-Reflexe mit zunehmender Anzahl von elastischen Elementen zu. Daher ist dieses Verfahren ideal für Sensoren mit einer großen Anzahl von elastischen Elementen geeignet. Der Begriff "Abschätzen" weist darauf hin, dass nicht notwendigerweise eine mittlere Auslenkung der elastischen Elemente als konkrete Messgröße beispielsweise in $\mu$m ermittelt wird. Stattdessen könnten relative Änderungen der Intensitäten, die sich auf Vergleichsmessungen beziehen, herangezogen werden, um eine Aussage über die Vitalität zu treffen. Obwohl in diesem Fall die Auslenkung nicht konkret ermittelt wird, wird sie dennoch zumindest implizit und qualitativ "abgeschätzt".

Ein weiterer besonderer Vorteil dieser Ausführungsform besteht darin, dass lediglich eine amplitudensensitive Detektion, aber keine frequenzsensitive Messung benötigt wird, die regelmäßig eine teure und aufwendige Auswerteelektronik erforderlich macht. Eine frequenzsensitive, d. h. zeitaufgelöste Messung würde auch den maximal detektierbaren Frequenzen Grenzen setzen. Dies ist bei einer reinen Intensitätsmessung nicht der Fall, stattdessen können Resonanzen mit Frequenzen bis in den GHz-Bereich detektiert werden.

Die beschriebenen Vorteile können auch in anderen Anwendungen ausgenutzt werden, in denen mittlere Auslenkungen von elastischen Elementen von Interesse sind. Beispielsweise können über die mittlere Auslenkung Resonanzen von Schwingungen elastischer Elemente detektiert werden. Hierbei kann beispielsweise die Anordnung aus elastischen Elementen mit variierenden Frequenzen angeregt werden. Wenn die Anregungsfrequenz mit einer Resonanzfrequenz der Anordnung übereinstimmt, führt dies zu einer Erhöhung der mittleren Auslenkung und somit zu einem detektierbaren Abfall der Intensität eines Bragg-Reflexes. Auch dies entspricht einer "Abschätzung" der mittleren Auslenkung der elastischen Elemente, selbst wenn die Auslenkung nicht notwendigerweise explizit ermittelt wird, sondern beispielsweise nur insoweit abgeschätzt wird, dass zwischen Resonanz und Nichtresonanz unterschieden wird oder die relative Güte von Resonanzen ermittelt wird.

In diesem Zusammenhang hat sich das oben beschriebene Sensordesign, bei dem die elastischen Elemente durch vertikale Säulen gebildet werden, als überraschend leistungsfähig herausgestellt. Auf den ersten Blick würde man vermuten, dass die Resonanz einer derartigen Säulen-Sensoranordnung im Wesentlichen derjenigen einer einzelnen Säule entspricht, jedoch mit einer Güte, die geringer als diejenige einer einzelnen Säule ist, weil die Säulen und damit ihre individuellen Eigenfrequenzen fertigungsbedingt nicht exakt identisch sind, wodurch die Resonanz des Sensors als Ganzem eine gegenüber der Resonanz individueller Oszillatoren erhöhte spektrale Breite erhalten sollte. Der Erfinder hat jedoch festgestellt, dass bei der gegebenen Miniaturisierung des Sensordesigns die Resonanzmoden nicht den Schwingungsmoden einzelner Säulen entsprechen, sondern dass eine Vielzahl von Schwingungsmoden des Gesamtsystems aus Säulen auftritt, die zu wesentlich schmaleren Resonanzen führt, als man dies von einer Überlagerung der Resonanzen einzelner entkoppelter Säulen erwartet hätte, und die in der Tat typischerweise schmaler als die Resonanz einer einzelnen gleichartigen Säule sind. Der Erfinder vermutet, dass die Säulen bei ausreichender Miniaturisierung, d. h. bei Abständen von lediglich einigen Mikrometern durch die Umgebungsluft und/oder über das Substrat gekoppelt sind, sodass sich als Resonanzen Eigenfrequenzen eines Systems aus gekoppelten Oszillatoren ergeben. Ein besonderes und überraschendes Ergebnis ist jedoch, dass die spektrale Breite dieser Resonanzen unerwartet gering ist, was eine äußerst präzise Resonanzmessung erlaubt.

Die außerordentlich günstige Kombination aus der Güte der Schwingungsmoden und der Einfachheit des Detektionsverfahrens kann man sich beispielsweise in der Messung der Konzentration vorbestimmter Partikel zu Nutze machen. Beispielsweise lassen sich die elastischen Elemente zumindest abschnittsweise mit einem Material beschichten, an dem sich vorbeschriebene Partikel selektiv anlagern. Bei dem oben beschriebenen Beispiel eines Sensors mit einer Vielzahl säulenförmiger Elemente könnten beispielsweise die Stirnseiten der oberen Enden der säulenförmigen Elemente mit einem derartigen Material beschichtet werden. Je nach Konzentration der zugehörigen Partikel in der Umgebungsatmosphäre werden sich mehr oder weniger Partikel anlagern, was zu einer Änderung des Resonanzspektrums führen wird. Beispielsweise ist zu erwarten, dass die Anlagerung einiger weniger Partikel zunächst zu einer "Verstimmung" einzelner Resonatoren und daher lediglich zu einer Schwächung der Resonanz bei derselben Resonanzfrequenz führt. Bei einem größeren Ausmaß von Anlagerungen werden hingegen andere Resonanzmoden auftauchen. Es ist sogar möglich, dass die Anlagerung eines einzigen Partikels auf der Säule die komplette gekoppelte Mode verändert, sodass auch einzelne Partikel zu einer Resonanzverschiebung führen können. Die zugehörigen Änderungen des Resonanzspektrums können experimentell ermittelt und der Konzentrationsdetektor entsprechend kalibriert werden.

Zusätzlich oder alternativ kann anhand mindestens einer detektieren Resonanzfrequenz die Masse von angelagerten Partikeln ermittelt werden. Je nach Masse der angelagerten Partikel werden sich andere Resonanzspektren ergeben, die wiederum einfach durch Intensitätsabfälle von Bragg-Reflexen ermittelt werden können. Dadurch wird ein sehr empfindlicher Massedetektor geschaffen. Da sich die Anordnung aus elastischen Elementen sehr gut miniaturisieren lässt, lassen sich so auch kleinste Massen sehr genau messen.

Wie eingangs erwähnt wurde, kann wertvolle Information über die Auslenkung der elastischen Elemente dadurch gewonnen werden, dass das Beugungsbild der kohärent beleuchteten elastischen Elemente direkt untersucht wird, beispielsweise in Form einer einfachen Intensitätsmessung einzelner Bragg-Reflexe. Das Verfahren ist jedoch nicht hierauf beschränkt. Da das Fraunhofer-Beugungsmuster der Fouriertransformierten der streuenden Struktur, d. h. der elastischen Elemente in ihrem aktuellen Auslenkungszustand entspricht und die Fouriertransformierte ein bijektive Abbildung ist, ist sämtliche Information über die Auslenkungen jedes einzelnen elastischen Elementes grundsätzlich in dem Fraunhofer-Beugungsbild noch enthalten. Insofern ist die Auswertung des Beugungsbildes selbstverständlich nicht auf die Messung der Intensität von Bragg-Reflexen beschränkt, letztere ist lediglich ein besonders einfach und präzise zu ermittelndes Maß für die mittlere Auslenkung der elastischen Elemente, die bei der Massendetektion oder der Detektion der Vitalität von Zellen von besonderer Bedeutung ist. Stattdessen können jedoch je nach zugrundeliegender physikalischer oder biologischer Fragestellung andere Informationen aus dem Beugungsbild ermittelt werden.

In einer weiteren Ausgestaltung wird vorgeschlagen, das Fraunhofer-Beugungsbild durch Wechselwirkung mit einer Optik, beispielsweise einer Linse, aus dem Fourierraum in den Orts- bzw. Ursprungsraum zu transformieren, um wieder ein "normales" Bild der Anordnung elastischer Elemente zu erhalten. Bei der Optik kann es sich beispielsweise um eine Sammellinse handeln, die als sogenannte "Fourier-Optik" eingesetzt wird. Das elektrische Feld des in der bildseitigen Brennebene liegenden Beugungsbildes entspricht dabei der räumlichen Fouriertransformierten des elektrischen Feldes in der objektseitigen Brennebene.

Die Verwendung einer derartigen "Fourier-Optik" gestattet es, ein vergrößertes Realbild zu erzeugen, ohne dass ein Mikroskop verwendet werden müsste, und stellt somit eine sehr kostengünstige Alternative für einen herkömmlichen Aufbau mit Mikroskop dar. Ein weiterer Vorteil dieser Weiterbildung besteht darin, dass eine Vorrichtung, die in einem Betriebsmodus im Fourierraum arbeitet (beispielsweise um Intensitäten einzelner Bragg-Reflexe zu messen), schnell und einfach umgerüstet werden kann, um eine "realoptische" Abbildung der Anordnung elastischer Elemente zu erhalten. Auf diese Weise erhält man die Vorzüge beider Detektionsmethoden in ein und derselben Vorrichtung mit minimalem zusätzlichen apparativen Aufwand gegenüber einer rein auf Beugungsmusterdetektion basierten Vorrichtung.

Unabhängig davon, ob die oben beschriebene Anordnung säulenförmiger elastischer Elemente als Kraftsensor oder als Massensensor verwendet werden soll, ist es vorteilhaft wenn der Querschnitt der säulenförmigen Elemente am oberen Ende größer ist als am unteren Ende, d. h. die säulenförmigen Elemente eine unterkehlige Gestalt haben. Durch den geringen Querschnitt im Bereich des unteren Endes kann eine verhältnismäßig kleine Federkonstante erreicht werden, während ein verhältnismäßig großer Querschnittsbereich des oberen Endes zur Verfügung gestellt werden kann, an dem das Beleuchtungslicht gestreut werden kann, was die Intensität des Beugungsbildes erhöht.

Vorzugsweise ist der Durchmesser am unteren Ende der Säule kleiner als 500 nm, besonders vorzugsweise kleiner als 200 nm und insbesondere kleiner als 100 nm. Dadurch lassen sich sehr kleine Rückstellkräfte hinsichtlich der Verkippung der säulenförmigen Elemente erzielen. Wenn die Anordnung aus säulenförmigen Elementen als Zellkraftsensor verwendet werden soll, lassen sich damit selbst sehr geringe Zellkräfte messen.

In einer vorteilhaften Weiterbildung haben die säulenförmigen Elemente die Form eines auf dem schmalen Ende stehenden Kegelstumpfes, dessen halber Öffnungswinkel 0,1° bis 7°, vorzugsweise 0,5° bis 3° beträgt. Unter dem "halben Öffnungswinkel" wird der Winkel zwischen der Kegelachse und einer Mantellinie des Kegelstumpfes verstanden, die sich durch den Schnitt einer die Kegelachse erhaltenden Ebene mit der Mantelfläche ergibt.

Vorzugsweise gilt für die Federkonstante k der Säulen:

$$k = \frac{F}{\Delta x} \leq 10\ mN/m,\ \text{besonders vorzugsweise} \leq 1\ mN/m,$$

wobei $\Delta x$ die Auslenkung des oberen Endes des säulenförmigen Elementes in horizontaler Richtung und F eine horizontale Kraft ist, die am oberen Ende des säulenförmigen Elementes angreift. Derart geringe Federkonstanten erlauben wiederum die Messung äußerst geringer Kräfte und ist daher besonders im Zusammenhang mit Zellkraftmessungen von Vorteil.

Vorzugsweise bestehen das Substrat und die säulenförmigen Elemente aus einem Festkörpermaterial. Das Festkörpermaterial kann kristallin, polykristallin oder amorph sein und insbesondere durch ein Metall oder ein Halbleitermaterial gebildet werden. Durch die Verwendung des Festkörpermaterials können Verformungen im Substrat, wie sie bei Elastomer-Kraftsensoren auftreten, im Wesentlichen ausgeschlossen werden.

In einer vorteilhaften Weiterbildung ist das Material des Kraft- oder Massensensors GaAs, Si, SiN oder $SiO_2$. Hierbei handelt es sich um Materialien, die in der Halbleitertechnologie standardmäßig verwendet werden. Für die Zwecke der Erfindung ist dies - neben den geeigneten mechanischen Eigenschaften dieser Materialien - deshalb von Bedeutung, weil auf die ausgereiften Herstellungsverfahren aus der Halbleiterindustrie zurückgegriffen werden kann. Daher können unter Verwendung an sich bekannter Verfahren aus der Halbleitertechnologie Nanostrukturen mit äußerster Präzision und Reproduzierbarkeit hergestellt werden, und dies zu äußerst günstigen Kosten.

Falls eine Zellkraftmessung vorgesehen ist, ist das Festkörpermaterial vorzugsweise biokompatibel, so dass die Zellen oder Kleinstlebewesen nicht durch Kontakt mit dem Material beeinträchtigt werden. Alternativ kann die den Zellen auszusetzende Oberfläche des Kraftsensors zumindest teilweise behandelt oder beschichtet sein, um eine Biokompatibilität herzustellen.

In einer vorteilhaften Weiterbildung beträgt die Länge der Säulen zwischen 3 $\mu$m und 15 $\mu$m, vorzugsweise zwischen 4 $\mu$m und 12 $\mu$m und besonders vorzugsweise zwischen 4 $\mu$m und 10 $\mu$m. Die am besten geeignete Länge hängt von der Größe der untersuchten Zellen und der zugrundeliegenden biologischen oder medizinischen Fragestellung ab.

Die für Massendetektion am besten geeignete Säulengeometrie ergibt sich aus der Kombination aus kleiner Säulenmasse, kleiner Federhärte, kleiner Dämpfung bzw. großer Schwingungsamplitude und hängt von der Masse des zu detektierenden Partikels ab.

Ein besonderer Vorteil des oben beschriebenen Masse- bzw. Kraftsensors besteht darin, dass er sich unter Verwendung etablierter Lithographietechniken ohne großen zusätzlichen Aufwand in einer Vielzahl unterschiedlicher Konfigurationen herstellen lässt, sodass es auch unter ökonomischen Gesichtspunkten möglich ist, eine Vielzahl von unterschiedlich konfigurierten Masse- oder Kraftsensoren für unterschiedliche Analyten, Zelltypen oder Experimente anzubieten. Dabei ist die Querschnittsform der Säulen frei wählbar.

Vorzugsweise sind die säulenförmigen Elemente in einer rechteckigen oder hexagonalen Gitterstruktur auf dem Substrat angeordnet, wobei die Differenz aus Gitterkonstante des Gitters und dem Querschnitt der Säule am unteren Ende, das heißt der Zwischenraum zwischen benachbarten Säulen, vorzugsweise zwischen 1 $\mu$m und 10 $\mu$m beträgt.

Ferner beträgt die Anzahl der säulenförmigen Elemente auf dem Kraftsensor vorzugsweise mindestens 100, besonders vorzugsweise mindestens 1000 und noch bevorzugter mindestens 5000. Je größer die Anzahl der säulenförmigen Elemente, desto schärfer sind die Bragg-Reflexe. Insofern wird die Detektion - anders als im Stand der Technik - mit zunehmender Anzahl von elastischen Elementen in gewisser Weise sogar einfacher.

Ferner betrifft die Erfindung eine Vorrichtung zur Detektion der Auslenkung einer Mehrzahl elastischer Elemente, die auf vorteilhafte Weise in einem Verfahren nach einer der oben beschriebenen Weiterbildungen Anwendung finden kann. Die Vorrichtung umfasst eine Aufnahme zum Aufnehmen eines Sensors mit einer Mehrzahl elastischer Elemente, eine Lichtquelle, die so angeordnet oder anordenbar ist, dass sie einen in oder auf der Aufnahme angeordneten Sensor derart beleuchten kann, dass durch an den elastischen Elementen gestreutes Licht ein Beugungsbild erzeugt wird, einen optischen Sensor, insbesondere Bildsensor, der geeignet ist, zumindest einen Teil des Beugungsbildes oder eines Bildes, welches durch Wechselwirkung des Beugungsbildes mit weiteren optischen Komponenten erzeugt wurde, zu empfangen, und eine Steuerung, die geeignet ist, aus dem empfangenen Bild oder Bildteil Informationen bezüglich des Auslenkungszustandes der elastischen Elemente des Sensors zu ermitteln.

Ferner betrifft die Erfindung eine Einrichtung zum Ermitteln von Zellkräften, die folgendes umfasst: einen Zellkraftsensor, der eine Mehrzahl säulenförmiger Elemente umfasst, die jeweils an ihrem unteren Ende an einem Substrat befestigt sind und ein oberes freies Ende haben, und eine Vorrichtung zur Detektion der Auslenkung der säulenförmigen Elemente nach der oben beschriebenen Art. Der Zellkraftsensor kann hierbei nach irgendeiner der oben beschriebenen vorteilhaften Arten ausgebildet sein.

Ferner betrifft die Erfindung eine Einrichtung zur Detektion der Masse und/oder Konzentration von Partikeln, die folgendes umfasst: einen Massensensor, der eine Mehrzahl säulenförmiger Elemente umfasst, die jeweils an ihrem unteren Ende an einem Substrat befestigt sind und ein oberes freies Ende haben, wobei die oberen Enden der Säulen zur Anlagerung von zu detektierenden Partikeln geeignet oder funktionalisiert sind, und eine Vorrichtung zur Detektion der Auslenkung der säulenförmigen Elemente nach der oben beschriebenen Art. Auch hier kann der Massensensor nach irgendeiner der oben beschriebenen Arten ausgebildet sein.

KURZBESCHREIBUNG DER FIGUREN

Weitere Vorteile und Merkmale der Erfindung ergeben sich auch der folgenden Beschreibung, in der die Erfindung anhand von Ausführungsbeispielen unter Bezugnahme auf die beigefügten Zeichnungen erläutert wird. Darin zeigen:

| | |
|---|---|
| Fig. 1 (a) | eine schematische Darstellung einer lebenden Zelle in einer natürlichen extrazellulären Matrix, |
| Fig. 1 (b) | eine schematische Darstellung einer lebenden Zelle, die zwischen den säulenförmigen Elementen eines Kraftsensors angeordnet ist, |
| Fig. 2 | eine schematische Darstellung der Wechselwirkung einer Zelle mit einer exemplarischen Säule eines Kraftsensors, |
| Fig. 3 (a) - (c) | Elektronenmikroskop-Aufnahmen von erfindungsgemäßen Kraftsensoren, |
| Fig. 4 | eine schematische Ansicht einer Vorrichtung zur Detektion der Auslenkung einer Mehrzahl elastischer Elemente nach einer Weiterbildung der Erfindung, |
| Fig. 5 | eine Elektronenmikroskop-Aufnahme einer Draufsicht auf eine Anordnung von 5 x 5 elastischen Säulen, |
| Fig. 6 | eine Konturgrafik und eine dreidimensionale Darstellung der Intensitätsverteilung der Fouriertransformierten eines quadratischen Säulengitters, |
| Fig. 7 | das Beugungsbild eines Kraftsensors mit 80 x 80 Säulen, |
| Fig. 8 | die relative Intensität $I/I_0$ eines Bragg-Reflexes in Abhängigkeit von einer Treiberfrequenz eines piezoelektrischen Elementes, |
| Fig. 9 | die relative Intensität $I/I_0$ eines Bragg-Reflexes in Abhängigkeit von der Treiberspannung eines piezoelektrischen Elementes, |
| Fig. 10 | die relative Intensität $I/I_0$ eines Bragg-Reflexes in Abhängigkeit von der Treiberfrequenz eines piezoelektrischen Elementes für unterschiedliche Bragg-Reflexe, |
| Fig. 11 | eine optische Aufnahme der Draufsicht auf einen Kraftsensor, und |
| Fig. 12 | links die Gesamtamplitude der Schwingungen eines 6 x 7 Säulen großen Ausschnittes aus einem Kraftsensor, ermittelt aus einem realoptischen Bild, und rechts dieselben Daten im Vergleich mit dem Ergebnis der Ermittlung der Schwingungsamplituden über die Intensität von Bragg-Reflexen. |

BESCHREIBUNG DER BEVORZUGTEN AUSFÜHRUNGSFORMEN

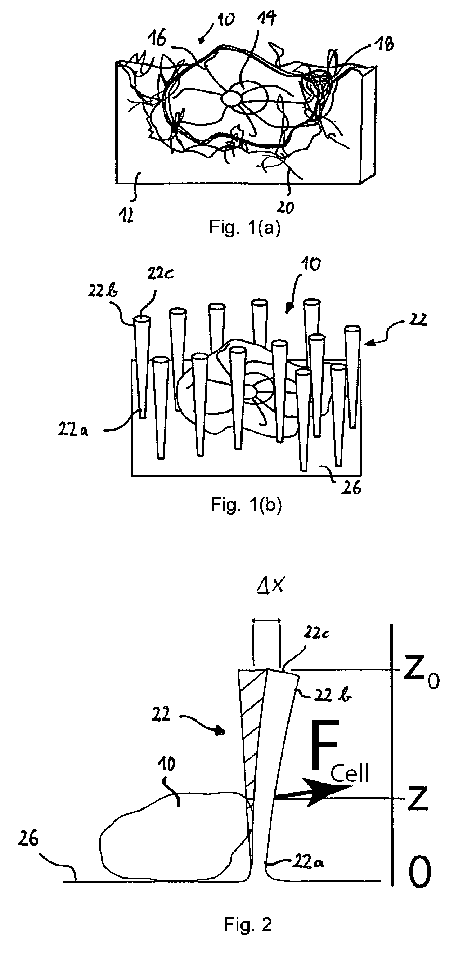

Im Folgenden wird das erfindungsgemäße Verfahren beispielhaft unter Bezugnahme auf Zellkraftmessungen beschrieben. Zur Erläuterung des Prinzips der Zellkraftmessung wird zunächst auf Fig. 1 (a) verwiesen, in der eine Zelle 10 in einer natürlichen extrazellulären Matrix 12 schematisch dargestellt ist. Die Zelle 10 hat einen Zellkern 14 und ein Zytoskelett mit astralförmig angeordneten Mikrotubuli 16 und einem Aktin-Kortex 18. Die natürliche extrazelluläre Matrix 12 kann man sich als Mikro-Topographie vorstellen, die mit Nanostrukturen, schematisch unter Bezugszeichen 20 dargestellt, bedeckt ist. Quantitative Experimente können nur schwer in natürlicher Umgebung durchgeführt werden, während Untersuchungen auf ebenen Flächen den wichtigen mechanischen Stimulus vernachlässigen, der sich in der natürlichen Umgebung ergibt.

Fig. 1 (b) ist eine schematische Darstellung der Zelle 10, die zwischen säulenförmigen Elementen 22 eines Kraftsensors 24 angeordnet ist, die im Folgenden einfach als "Säulen" bezeichnet werden. Bei dem Kraftsensor 24 sind die Säulen 22 mit ihrem unteren Ende 22a an einem Substrat 25 befestigt. Das obere Ende 22b der Säulen 22 ist frei, so dass sich die Säulen aus ihrer senkrechten Ruhelage verkippen können, wenn die Zelle 10 eine Kraft auf diese ausübt. Nach diesem Prinzip werden die Zellkräfte lokal, d. h. am Ort der jeweils betreffenden Säule 22, gemessen.

Die Säulen 22 des Kraftsensors 24 haben daher eine doppelte Funktion, indem sie einerseits die Zellkraft durch das Ausmaß Verkippung aus ihrer Ruhelage anzeigen, andererseits aufgrund ihrer Rückstellkraft eine extrazelluläre Matrix für die Zelle 10 simulieren und daher ähnliche mechanische Stimuli für die Zelle erzeugen, wie dies in der natürlichen Umgebung der Fall wäre.

In Fig. 2 ist das Funktionsprinzip der Kraftmessung anhand einer einzelnen Säule 22 näher dargestellt. Wie in Fig. 1 (b) und Fig. 2 zu sehen ist, hat eine jede Säule 22 eine konische Gestalt, bei der das untere Ende 22a einen geringeren Durchmesser hat, als das obere Ende 22b. Bei dem bevorzugten Kraftsensor 24 beträgt der Durchmesser am unteren Ende 22a einer jeden Säule 22 lediglich 500 nm oder weniger, in bevorzugten Ausführungsformen lediglich 200 nm oder sogar 100 nm oder weniger. Dies hat zur Folge, dass die Säule 22 sich vornehmlich im Bereich des unteren Endes 22a zur Seite biegt, wenn die Zelle 10 eine horizontale Kraft $F_{cell}$ auf die Säule 22 ausübt, während die Verformung der Säule 22 in einem oberen Abschnitt vergleichweise gering ist. Die Messgröße bei dem Kraftsensor 24 ist die Auslenkung Δx des oberen Abschnittes 22b der Säule, der näherungsweise einem Drehmoment entspricht, das von der Zelle 10 auf die Säule 22 ausgeübt wird. Um die tatsächlich angreifende Kraft zu bestimmen, muss das Drehmoment durch den Hebelarm dividiert werden. Wie aus Fig. 2 zu ersehen ist, hängt der Hebelarm von der Höhe z über dem Substrat 25 ab, in der die Zelle 10 gegen die Säule 22 schiebt (oder an dieser zieht). Der Hebelarm kann experimentell zumindest näherungsweise auf hier nicht beschriebene Weise ermittelt werden.

Die Auslenkung der Säule 22 aus ihrer Ruhelage wird üblicherweise durch Licht detektiert, welches von der Oberfläche bzw. Stirnfläche 22c der Säule 22 an deren oberen Ende 22b reflektiert wird. Das reflektierte Licht wird dann herkömmlicherweise über eine Mikroskopanordnung auf einen Bildsensor abgebildet. Mit einem geeigneten Analyseprogramm kann dann die Auslenkung einer jeden einzelnen Säule 22 ermittelt und in eine zugehörige lokale Kraft umgerechnet werden. Auf diese Weise können die Zellkräfte sehr genau ermittelt werden.

In manchen Anwendungen kann es jedoch vorkommen, dass man gar nicht an dem konkreten Verhalten einzelner Zellen interessiert ist, sondern vielmehr an dem statistischen Verhalten einer Vielzahl von Zellen. Ein Beispiel hierfür ist die Untersuchung, wie sich die Zugabe eines bestimmten Wirkstoffes, beispielsweise eines Medikaments, auf die Aktivität oder Vitalität der Zellen auswirkt. In diesem Fall wäre man also nicht an der aktuellen Zellkraft einer einzelnen Zelle 10 interessiert, sondern an einem Durchschnittswert eines ausreichend großen statistischen Ensembles. Hier stößt das herkömmliche Detektionsverfahren, bei dem die Auslenkung jeder einzelnen Säule 22 gemessen wird, schnell an die Grenzen der Praktikabilität.

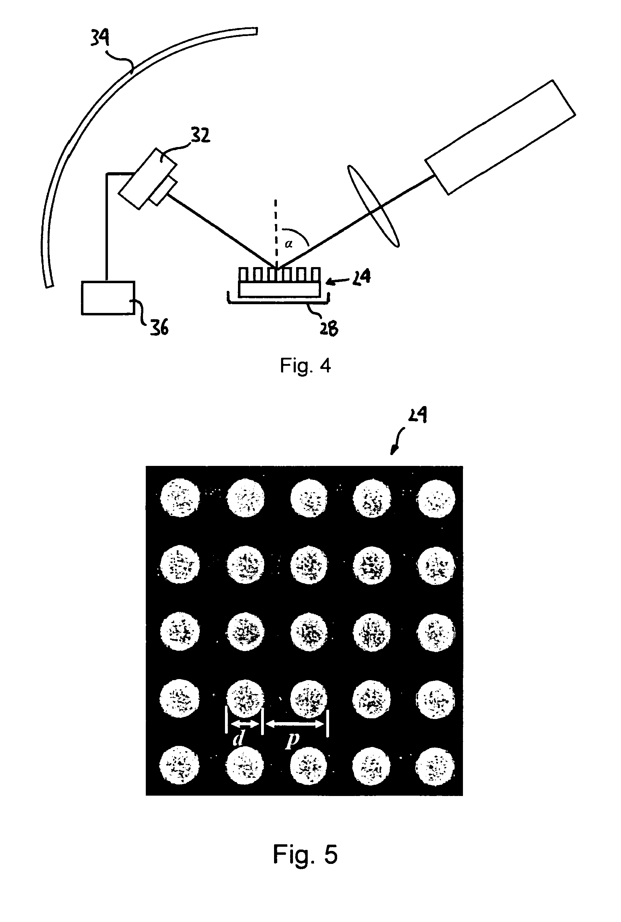

Um diese Schwierigkeiten zu vermeiden, wird erfindungsgemäß statt der herkömmlichen direkten optischen Mikroskopabbildung ein Beugungsbild des Kraftsensor 24 erzeugt und detektiert. Unter Bezugnahme auf Fig. 4 wird hierzu eine Vorrichtung 26 verwendet, die eine Aufnahme 28 umfasst, die zur Aufnahme des Kraftsensors 24 geeignet ist. Die Aufnahme 28 kann irgendein Abschnitt oder irgendeine Komponente sein, auf der oder in der der Kraftsensor 24 angeordnet werden kann.

Ferner umfasst die Vorrichtung 26 eine Lichtquelle 30, bei der es sich in dem gezeigten Ausführungsbeispiel um einen Laser handelt. Die Lichtquelle 30 muss eine Kohärenzlänge haben, die zumindest den mittleren Abstand benachbarter Säulen 22 des Kraftsensors 24 übersteigt, um ein aussagekräftiges Beugungsbild zu erzeugen. Dies ist jedoch bei den mikroskopischen bzw. nanoskopischen Abmessungen des Kraftsensors 24 keine besonders strenge Anforderung an die Lichtquelle 30, sodass die Verwendung eines Lasers als Lichtquelle 30 nicht zwingend ist, sondern auch andere Lichtquellen in Betracht kommen. Die Lichtquelle 30 ist unter einem Winkel α in Bezug auf den Kraftsensor 24, bzw. dessen Substrat 25 angeordnet.

Ferner umfasst die Vorrichtung 26 einen optischen Sensor, der geeignet ist, zumindest einen Teil des Beugungsbildes zu empfangen. Im gezeigten Ausführungsbeispiel wird der optische Sensor durch eine CCD-Kamera 32 gebildet. Die CCD-Kamera kann so positioniert werden, dass sie ausgewählte Bragg-Reflexe empfängt und deren Intensitätsmessung gestattet. Außerdem ist ein virtueller Monitor unter Bezugszeichen 34 schematisch dargestellt, auf den weiter unten Bezug genommen wird. Schließlich enthält die Vorrichtung 26 eine Steuerung 36, die zur Durchführung des hierin beschriebenen Verfahrens geeignet ist.

Die Entfernung zwischen der CCD-Kamera 32 und dem Kraftsensor 24 in dem Aufbau 26 von Fig. 4 liegt im ein- bis zweistelligen Zentimeterbereich. Verglichen mit der Größenordnung der streuenden Strukturen, in diesem Fall der Stirnflächen 22c an den oberen Enden 22b der Säulen 22, handelt es sich hierbei also um eine große Entfernung, sodass das Beugungsbild im Bereich der CCD-Kamera 32 dem Fernfeld bzw. dem Fraunhofer-Beugungsmuster entspricht, welches seinerseits der zweidimensionalen Fouriertransformierten der Feldverteilung unmittelbar hinter der Beugungsstruktur entspricht. Dies würde selbst in einer miniaturisierten Ausführungsform noch mit guter Genauigkeit gelten, wenn die Entfernung zwischen dem Kraftsensor und dem CCD-Sensor lediglich im zweistelligen Mikrometerbereich läge.

Der Zusammenhang zwischen einer Funktion f(x, y) in zwei Variablen x und y und ihrer Fouriertransformierten $F(k_x, k_y)$ ist in den folgenden Gleichungen zusammengefasst:

$$f(x, y) = \frac{1}{(2\pi)^2} \int_{-\infty}^{\infty} \int_{-\infty}^{\infty} F(k_x, k_y) e^{-i(k_x x + k_y y)} dk_x dk_y$$

$$FT\{f(x, y)\} = \int_{-\infty}^{\infty} \int_{-\infty}^{\infty} f(x, y) e^{i(k_x x + k_y y)} dx dy = F(k_x, k_y).$$

Als streuende Struktur werden hier die Stirnflächen 22c der oberen Enden 22b der Säulen 22 des Kraftsensors 24 angesehen. Fig. 5 zeigt eine Draufsicht auf diese Stirnflächen 22c in einer Elektronenmikroskop-Aufnahme eines Kraftsensors mit 5 x 5 Säulen in quadratischer Anordnung, bei denen der Säulendurchmesser am oberen Ende 22b d = 1 µm und die Periode p = 2 µm betragen. Die streuende Struktur a(x, y), die man in Analogie zu der Beugung am Mehrfachspalt auch als "Öffnungsfunktion" bezeichnen würde und die durch eine Anordnung von N x M Streuflächen mit einem Kreisdurchmesser d und der Periode p gebildet wird, lässt sich mathematisch als Faltung eines quadratischen Gitters aus δ-Funktionen und einer Kreisblendenfunktion $a_e(x, y)$ formulieren:

$$a(x,y) = a_e(x,y) \otimes \sum_{n=0}^{N-1} \delta(x/p - n) \sum_{m=0}^{M-1} \delta(y/p - m)$$

$$= a_e(x,y) \otimes p^2 \sum_{n=0}^{N-1} \delta(x - np) \sum_{m=0}^{M-1} \delta(y - mp)$$

$$\text{mit } a_e(x,y) = \begin{cases} 1 \text{ für } x^2 + y^2 = (d/2)^2 \\ 0 \text{ sonst} \end{cases}$$

Hierbei repräsentiert das Symbol "⊗" die Faltung. Die Fouriertransformierte von a(x, y), d. h. das Fraunhofer-Beugungsmuster lässt sich demnach wie folgt berechnen:

$$FT\{a(x,y)\} = E(k_x, k_y) = p^2 A_e(k_x, k_y) \sum_{n=0}^{N-1} (e^{-ik_x p})^n \sum_{m=0}^{M-1} (e^{-ik_y p})^m$$

$$= p^2 A_e(k_x, k_y) \frac{e^{-ik_x pN} - 1}{e^{-ik_x p} - 1} \cdot \frac{e^{-ik_y pM} - 1}{e^{-ik_y p} - 1}.$$

Unter Verwendung von $\sin(\alpha) = \dfrac{e^{i\alpha} - e^{-i\alpha}}{2i}$ ergibt sich für die Intensitätsverteilung I($k_x$, $k_y$):

$$I(k_x, k_y) \propto E(k_x, k_y) \cdot E^*(k_x, k_y)$$

$$= p^4 A_e^2(k_x, k_y) \left( \frac{\sin(N \frac{k_x p}{2})}{\sin(\frac{k_x p}{2})} \right)^2 \left( \frac{\sin(M \frac{k_y p}{2})}{\sin(\frac{k_y p}{2})} \right)^2$$

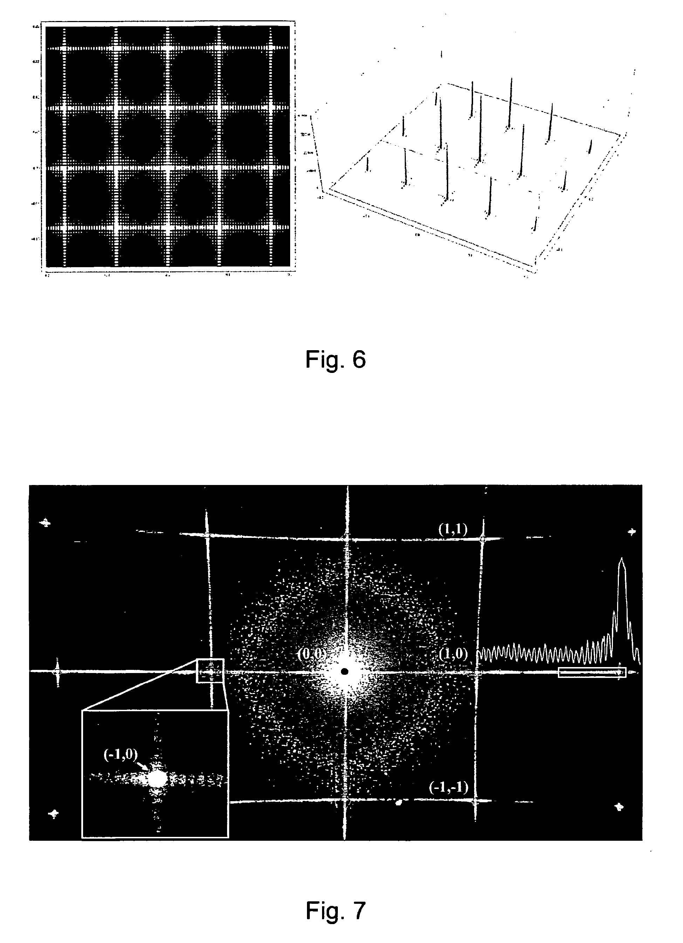

Hierbei ist die Fouriertransformierte der Kreisscheibenfunktion FT{$a_e$(x, y)} = $A_e$($k_x$, ky), die bekannte Bessel-funktion 1. Art der Ordnung 1. Fig. 6 zeigt die Intensität I($k_x$, $k_y$) aus der obigen Gleichung, was einer Abbildung auf den virtuellen kugelförmigen Monitor 34 von Fig. 4 mit einem Radius s entspricht. Dabei wurden folgende Parameter verwendet: N = M = 20, p = 3 µm, d = 1 µm, λ = 633 nm, α = 0 und s = 40 cm.

Wie Fig. 6 zu entnehmen ist, ergibt sich als Beugungsbild eine Mehrzahl von Intensitätsmaxima, die im Folgenden in Analogie zur Festkörperphysik als "Bragg-Reflexe" bezeichnet werden. Die in Fig. 6 erkennbaren verhältnismäßig scharfen Intensitätsspitzen sind eine Folge der Periodizität der Säulen 22 des Kraftsensors 24. Je größer die Anzahl der Säulen 22 ist, desto schärfer werden die Intensitätsmaxima an den Bragg-Reflexen. Wenn die Säulen 22 jedoch durch Zellkräfte aus ihrer Ruhelage ausgelenkt werden, wird die Periodizität der streuenden Struktur gestört, und es ist zu erwarten, dass die Intensität der Beugungsmaxima abnimmt. Dieser Effekt ist grundsätzlich aus der Festkörperphysik bekannt und kann durch den sogenannten Debye-Waller-Faktor quantifiziert werden. Das Debye-Waller-Modell ist entwickelt worden um die Intensität eine Bragg-Reflexes in Abhängigkeit von der Auslenkung eines Atoms in einer Kristallstruktur aus der Ruhelage zu untersuchen. Dabei wird angenommen, dass sich jedes Atom aufgrund thermischer Anregung unabhängig von den anderen Atomen um seine Gleichgewichtslage bewegt und sein Streuquerschnitt dabei erhalten bleibt. Wenn $\langle u^2 \rangle$ die mittlere quadratische Verrückung des Atoms und G der reziproke Gittervektor ist, ergibt sich nach dem Debye-Waller-Modell die folgende Abhängigkeit:

$$I = I_0 exp(-1/3 \langle u^2 \rangle) G^2)$$

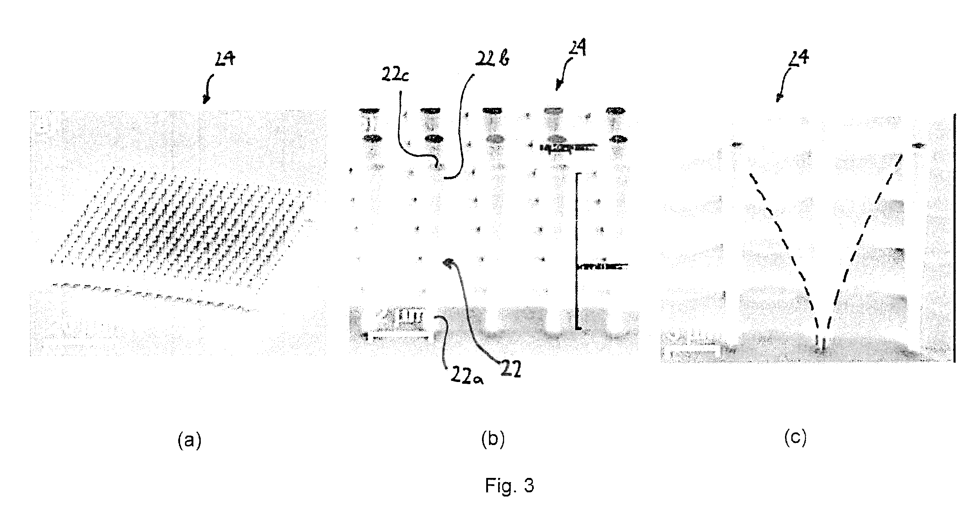

Hierbei ist $I_0$ die Intensität des Bragg-Reflexes by verschwindender Atombewegung, d. h. sehr tiefen Temperaturen. Die Intensität eines Bragg-Reflexes nimmt somit exponentiell mit dem Quadrat der mittleren Auslenkung ab. Obwohl dieses Modell entwickelt wurde, um die Temperaturabhängigkeit der Intensität kohärent elastisch gestreuter Strahlung in einem Kristallgitter zu beschreiben, sollte sich eine ähnliches Verhalten der Intensität auch bei anderen auslenkbaren streuenden Elementen, wie beispielsweise den Säulen 22 eines Kraftsensor 24, ergeben, solange die Kohärenzlänge des Lichtes ausreichend groß ist. Diese Vermutung hat der Erfinder bei einem Kraftsensor von der in Fig. 3 gezeigten Art experimentell verifiziert.

Fig. 7 ist das Beugungsbild, das mit einem echten Bildsensor (nicht gezeigt) aufgenommen wurde, der ähnlich angeordnet war wie der kugelförmige virtuelle Monitor 34, jedoch von ebener Gestalt war. Das Bild zeigt ein Beugungsbild eines Kraftsensors mit 80 x 80 Säulen, der mit einem roten Laser beleuchtet wurde. In runden Klammern sind die Beugungsordnungen, d. h. die Bragg-Reflexe nummeriert. Dabei entspricht die Beugungsordnung (0,0) der einfachen Rückreflexion, die keine wesentliche Information über den Auslenkungszustand enthält. Die Intensitäten der weiteren Bragg-Reflexe mindestens erster Ordnung hingegen repräsentieren unmittelbar die Unordnung in der streuenden Struktur, d. h. die mittlere Auslenkung der Säulen 22 des Kraftsensors 24. In Fig. 7 ist der Bragg-Reflex (-1,0) vergrößert dargestellt. Ferner ist im rechten Bereich des Bildes mit der hellen Linie eine Profildarstellung der Intensitätsverteilung in dem Bereich des darunterliegenden Rechtecks dargestellt.

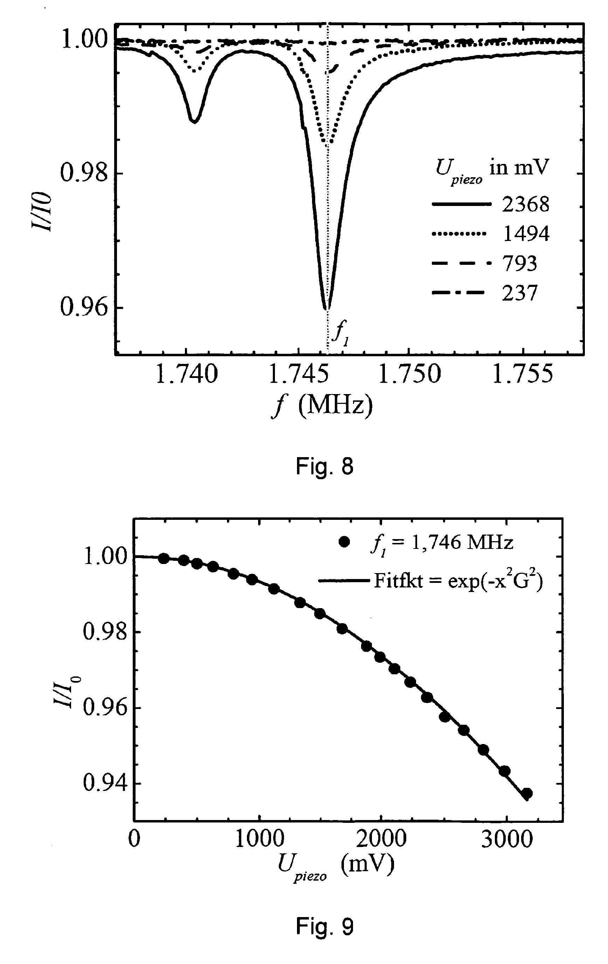

Fig. 8 zeigt die relativen Intensitätswerte $I/I_0$ in Abhängigkeit von einer Treiberfrequenz, mit der der Kraftsensor 24 durch ein Scher-Piezoelement angeregt wurde. Wie Fig. 8 zu entnehmen ist, nimmt die relative Intensität $I/I_0$ im Bereich von etwas über 1,746 MHz ab, was für eine erhöhte mittlere Auslenkung der Säulen spricht und auf eine erhöhte Schwingungsamplitude bzw. eine Resonanz zurückzuführen ist. In Fig. 8 sind die relativen Intensitäten $I/I_0$ für vier Fälle mit unterschiedlich hoher Anregung, d. h. unterschiedlich hoher Spannungsamplitude gezeigt, die am Piezoelement anliegt. Erwartungsgemäß sinkt die Intensität an der Resonanz umso stärker, je größer die Piezospannung ist, weil eine größere Piezospannung größere Auslenkungsamplituden mit sich bringt.

In Fig. 9 ist die Abhängigkeit der relativen Intensität $I/I_0$ von der Amplitude der Treiberspannung des piezoelektrischen Elementes gezeigt. Es zeigt sich, dass sich der Verlauf von $I/I_0$ zumindest bis zu einer Treiberspannungsamplitude von etwa 3 V gut nach der Debye-Waller-Theorie beschreiben lässt.

Als wesentliches Ergebnis lässt sich demnach feststellen, dass die gemessene Intensität eines Bragg-Reflexes ein Maß für die mittlere Auslenkung der elastischen Elemente ist. Daher kann bereits durch die Messung der Intensität eines einzigen Bragg-Reflexes die mittlere Auslenkung der elastischen Elemente abgeschätzt werden.

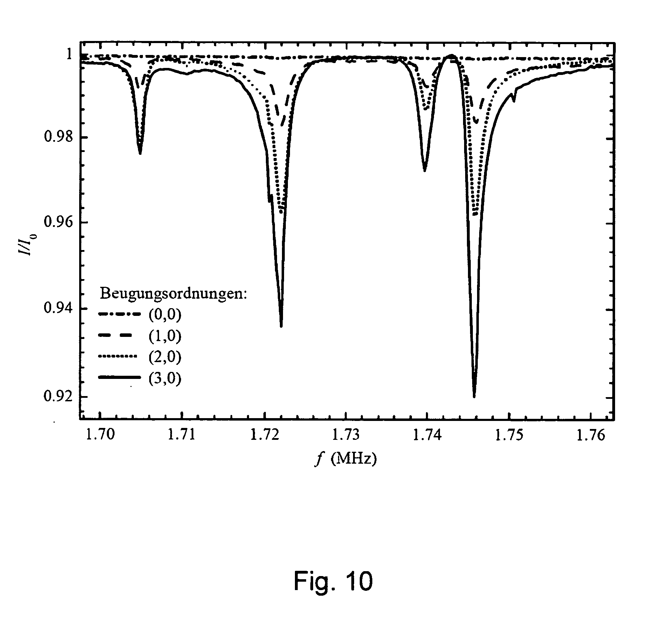

Fig. 10 zeigt wiederum die relative Intensität $I/I_0$ in Abhängigkeit von der Treiberfrequenz bei einem Kraftsensor mit 80 x 80 Säulen. In demselben Graph sind die relativen Intensitäten für unterschiedliche Beugungsordnungen, nämlich (0,0), (1,0), (2,0) und (3,0) gezeigt. Dabei fällt auf, dass die Abfälle in der relativen Intensität umso stärker ausfallen, je höher die Beugungsordnung ist. Ganz offensichtlich sind die Bragg-Reflexe höherer Ordnung empfindlicher für Unordnung bzw. Abweichungen von der periodischen Struktur. Dies bedeutet, dass sich Bragg-Reflexe höherer Ordnung für die Detektion der durchschnittlichen Auslenkung besonders gut eignen.

Zweitens fällt auf, dass der Kraftsensor offensichtlich nicht nur eine Resonanzfrequenz, sondern eine Mehrzahl von Resonanzfrequenzen aufweist. Dies weist darauf hin, dass die einzelnen Säulen 22 des Kraftsensors 24 gekoppelt sind, sodass der Kraftsensor 24 als Gesamtsystem gekoppelter Oszillatoren eine Vielzahl von Schwingungsmoden aufweist. Die Resonanzen dieser Gesamt-Schwingungsmoden sind dabei wesentlich schärfer als die Resonanz einer einzelnen Säule gleicher Art. Der Erfinder geht davon aus, dass die Säulen 22 durch die Umgebungsluft miteinander gekoppelt sind und sich auf diese Weise unterschiedliche Schwingungsmoden ausbilden.

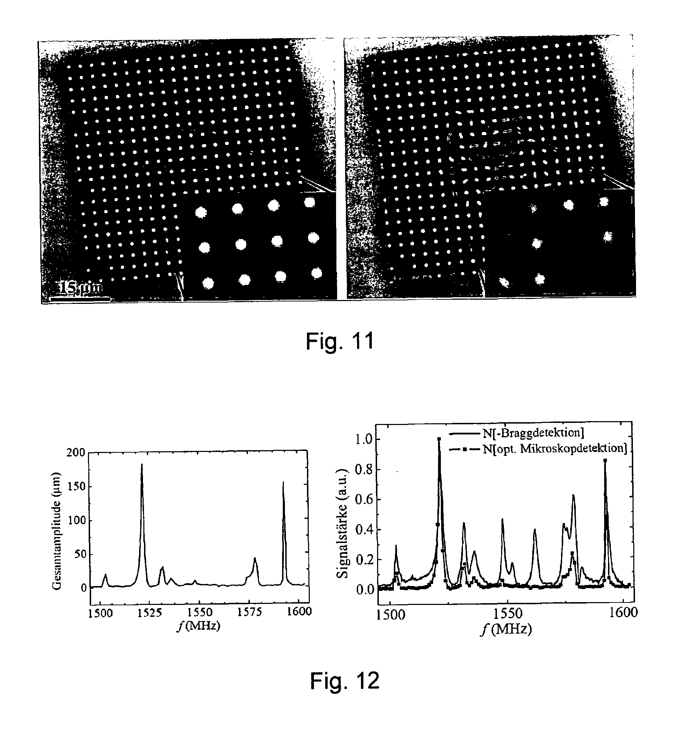

Der Erfinder konnte verifizieren, dass die Detektion der Schwingungsamplituden über die Bragg-Intensitäten tatsächlich das Schwingungsverhalten des Kraftsensors 24 richtig wiedergibt. In Fig. 11 zeigt die linke Abbildung eine optische Aufnahme der Draufsicht auf einen Kraftsensor 24, bei dem sich die Säulen 22 (nahezu) in Ruhe befinden, weil der Kraftsensor mit einer Frequenz ausgebildet wird, der keine Eigenschwingungsmode des Kraftsensors entspricht. Die rechte Abbildung in Fig. 11 zeigt dieselbe Ansicht in einem Zustand, in dem der Kraftsensor 24 durch ein Scher-Piezoelement (nicht gezeigt) resonant angeregt wird. In beiden Fällen ist das Substrat 25 mit einer Fläche des Scher-Piezoelements kraftschlüssig verbunden und wird durch dieses in der Substratebene mit einer bestimmten Treiberfrequenz hinund herbewegt. Wie der rechten Abbildung von Fig. 11 zu entnehmen ist, führt die Bewegung des Kraftsensors 24 mit der Resonanzfrequenz zur Anregung einer Schwingungsmode, bei der ein Teil der Säulen 22 mit unterschiedlich großen Amplituden schwingen, andere Säulen 22 hingegen in der Ruhelage verbleiben. In beiden Abbildungen ist ein Teilbereich vergrößert dargestellt.

Mit eigens entwickelten Bildverarbeitungsprogrammen kann anhand eines solchen realoptischen Bildes die Amplitude der Schwingungen ermittelt werden. Da der Rechenaufwand allerdings relativ groß ist, wurde diese Berechnung nur auf einen 6 x 7 Säulen großen Teilbereich eines 60 x 60 großen Säulenfeldes (nicht gezeigt) angewendet.

In der linken Abbildung von Fig. 12 ist die Gesamtamplitude der Schwingungen in Abhängigkeit von der Treiberfrequenz des genannten 6 x 7 Säulen großen Ausschnittes gezeigt. Hierbei handelt es sich wie gesagt um die Schwingungsamplituden, die aus einer Abfolge tatsächlich aufgenommener "reeller" odder "realoptischer" Bilder des Ausschnittes des Kraftsensors 24 abgelesen wurden.

Die rechte Abbildung von Fig. 12 zeigt dasselbe Gesamtamplitudenspektrum im Vergleich mit dem entsprechenden Spektrum, das sich aus der Messung über die Bragg-Intensitäten ergibt. Darin erkennt man, dass über die Bragg-Intensitäten sämtliche Resonanzen, die in der direkten optischen Beobachtung einzelner Säulen ermittelt wurden, ebenfalls erkannt werden. Ferner zeigt die rechte Abbildung von Fig. 12, dass mithilfe der Intensitäten der Bragg-Reflexe weitere Resonanzen detektiert werden konnten, die in der direkten optischen Messung nicht erkennbar waren. Der Grund hierfür liegt darin, dass in der optischen Detektion lediglich der genannte 6 x 7 Säulen große Ausschnitt aus dem Säulenfeld beobachtet wurde, im Fourierraum hingegen das Beugungsmuster des gesamten 60 x 60 Säulen großen Sensors detektiert wurde. Da bestimmte Schwingungsmoden in bestimmten Bereichen des Kraftsensors 24 lokalisiert sind, was bereits aus Fig. 11 erkennbar ist und durch weitere hier nicht gezeigte Aufnahmen bestätigt wird, ist verständlich, dass in der optischen Detektion lediglich eines Teilbereichs des Kraftsensors solche Schwingungsmoden übersehen wurden, bei denen die Säulen in dem überwachten Teilbereich nicht oder nur wenig ausgelenkt werden.

Insgesamt bestätigt Fig. 12, dass die ermittelten Intensitätsabfälle in einem Bragg-Reflex exakt mit den Resonanzen der Säulen 22, d. h. mit erhöhten mittleren Auslenkungen der Säulen 22 korrelieren.

Ein Säulensensor 24 von der in Fig. 3 gezeigten Art lässt sich in einer alternativen Ausführungsform auch als Massensensor verwenden. Dazu werden beispielsweise die Stirnflächen 22c an den oberen Enden 22b der Säulen 22 so beschichtet, dass sich Partikel daran anlagern können. Je nach Masse der anlagernden Partikel verschieben sich die Resonanzen in dem Spektrum von Fig. 10, sodass aus dem veränderten Spektrum auf die Masse der angelagerten Partikel zurückgeschlossen werden kann. Auf diese Weise wird ein neuartiger, sehr empfindlicher Massensensor geschaffen. Ein besonderes und überraschendes Ergebnis hierbei ist, dass die Resonanzen des Massensensors als System aus gekoppelten elastischen Elementen spektral wesentlich schmaler bzw. von größerer Güte sind, als von der Resonanz eines einzelnen elastischen Elementes her zu erwarten gewesen wäre. Daher erweist sich insbesondere ein Massensensor 24, der auf einer Vielzahl dicht beieinander angeordneter Säulen 22 besteht, als außerordentlich empfindlich und genau.

In einer Ausführungsform können die Stirnflächen 22c an den oberen Enden 22b der Säulen 22 auch so funktionalisiert sein, dass sich lediglich bestimmte Partikel oder Gruppen von Partikeln selektiv anlagern. In diesem Fall kann eine Änderung des Spektrums überwacht und verwendet werden, um die Konzentration der Partikel abzuschätzen. Je höher die Konzentration der zu detektierenden Partikel ist, desto größer ist der Anteil der Säulen 22, an denen sich die Partikel tatsächlich ablagern, und desto stärker macht sich dies im Spektrum bemerkbar. Die bestimmten Konzentrationen entsprechenden Spektren können in Kalibrationsmessungen bestimmt werden, und die ermittelten Spektren können im tatsächlichen Gebrauch mit den Kalibrationsspektren verglichen werden, um auf die Konzentration rückzuschließen.

Auch bei dieser Ausführungsform zeigen sich die besonderen Vorteile der unterkehligen Säulenform, bei der die Stirnenden 22c größer sind als die unteren Enden 22a. Aufgrund der unterkehligen Gestalt ist es relativ einfach möglich, ausschließlich die Stirnflächen 22c zu funktionalisieren, beispielsweise durch Aufdampfen oder Stempeln, damit die Federhärte der Säulen durch die Funktionalisierung nicht geändert wird. Die unterkehlige Gestalt erlaubt ferner eine Vergleichsweise große aktive Fläche, welche eine höhere Ausbeute bezüglich der Anlagerung verspricht, bei der es sich um einen statistischen Prozess handelt. Im Übrigen ist die Stirnfläche 22c auch deshalb der ideale Ort für die Anlagerung der zu detektierenden Partikel, weil die zusätzliche Masse im Bereich der Stirnfläche 22c den größten Einfluss auf die Resonanzfrequenz haben wird.

Auch bei einer Verwendung als Massensensor ist eine große Anzahl von elastischen Elementen von Vorteil, um eine verbesserte Statistik zu erhalten. Mit dem hier beschriebenen Verfahren kann zumindest die mittlere Auslenkung auch bei einer sehr großen Anzahl von elastischen Elementen sehr einfach und dennoch präzise bestimmt werden.

BEZUGSZEICHENLISTE

| 10 | Zelle |
|----|-------|
| 12 | extrazelluläre Matrix |
| 14 | Zellkern |
| 16 | Mikrotubuli |
| 18 | Aktin-Kortex |
| 20 | Nanostruktur |
| 22 | Säule |
| 22a | unteres Ende der Säule 22 |
| 22b | oberes Ende der Säule 22 |
| 22c | Stirnfläche der Säule 22 |
| 24 | Kraftsensor |
| 25 | Substrat |
| 26 | Vorrichtung zur Detektion der Auslenkung von Säulen 22 |
| 28 | Aufnahme |
| 30 | Lichtquelle |
| 32 | CCD-Kamera |
| 34 | virtueller Monitor |
| 36 | Steuerung |

**Patentansprüche**

1. Verfahren zur Detektion der Auslenkung einer Mehrzahl elastischer Elemente (22), wobei

   - die elastischen Elemente (22) gegen eine Rückstellkraft aus einer Ruhelage auslenkbar sind und
   - die elastischen Elemente (22) periodisch angeordnet sind,

   **dadurch gekennzeichnet, dass** die Anordnung der elastischen Elemente (22) mit Licht beleuchtet wird, dessen Kohärenzlänge größer ist als der mittlere Abstand benachbarter elastischer Elemente (22),
   ein Beugungsbild des an der Anordnung von elastischen Elementen (22) gestreuten Beleuchtungslichtes erzeugt wird,
   zumindest ein Teil des Beugungsbildes direkt oder nach Wechselwirkung mit weiteren optischen Komponenten von einem optischen Sensor (32) detektiert wird, und
   das detektierte Bild oder Messsignal weiter analysiert wird, um daraus Informationen bezüglich des Auslenkungszustandes der elastischen Elemente (22) zu ermitteln.

2. Verfahren nach Anspruch 1, bei dem
   die elastischen Elemente (2) als Resonatoren und/oder zur Messung einer auf ein jeweiliges elastisches Element (22) wirkenden Kraft geeignet sind, und bei dem vorzugsweise

   - die elastischen Elemente (22) durch säulenförmigen Elemente gebildet werden, die jeweils mit einem unteren Ende (22a) an einem Substrat (25) befestigt sind und ein oberes freies Ende (22b) haben, und
   - das genannte Beugungsbild durch das an den oberen Enden (22b) der säulenförmigen Elemente (22) gestreute Licht gebildet wird.

3. Verfahren nach Anspruch 1 oder 2, bei dem die Intensität von mindestens einem Bragg-Reflex mindestens erster Ordnung ermittelt und verwendet wird, um die mittlere Auslenkung der elastischen Elemente (22) abzuschätzen, wobei vorzugsweise die mittlere Auslenkung der elastischen Elemente (22) abgeschätzt wird, um mindestens eine Resonanz von Schwingungen elastischer Elemente (22) zu detektieren, wobei vorzugsweise
   anhand der mindestens einen Resonanz ermittelt wird, ob und/oder in welchem Umfang Partikel an den elastischen Elementen (22) angelagert sind, wobei
   die elastischen Elemente (22) vorzugsweise zumindest abschnittsweise mit einem Material beschichtet sind, an dem sich vorbestimmte Partikel selektiv anlagern.

4. Verfahren nach einem der vorhergehenden Ansprüche, bei dem die Auslenkung aufgrund resonanter Anregung erfolgt.

5. Verfahren nach Anspruch 2, 3 oder 4, bei dem sich biologische Zellen (10) oder Kleinsttiere auf oder zwischen den säulenförmigen Elementen (22) befinden, und bei dem die mittlere Auslenkung vorzugsweise abgeschätzt wird, um die Aktivität und/oder Vitalität der Zellen (10) oder Kleinsttieren zu bestimmen,
wobei die Aktivität und/oder Vitalität vorzugsweise in Antwort auf die Zugabe eines Mediums, insbesondere eines Medikamentes ermittelt wird.

6. Verfahren nach Anspruch 2, bei dem anhand der mindestens einen Resonanz ermittelt wird, ob und/oder in welchem Umfang sich Partikel an den oberen Enden (22b) der säulenförmigen Elemente (22) anlagern, wobei zumindest die Stirnseite (22c) der oberen Enden (22b) der säulenförmigen Elemente (22) vorzugsweise mit einem Material beschichtet ist, an dem sich vorbestimmte Partikel selektiv anlagern.

7. Verfahren nach einem der Ansprüche 3 bis 6, bei dem mindestens eine Resonanzfrequenz detektiert wird, und anhand der mindestens einen detektierten Resonanzfrequenz die Masse von angelagerten Partikeln ermittelt wird.

8. Verfahren nach Anspruch 1, 2 oder 4, bei dem das Beugungsbild mindestens erster Ordnung mithilfe einer Fourier-Optik in ein Bild der Anordnung elastischer Elemente (22) transformiert wird.

9. Verfahren nach einem der Ansprüche 2 bis 8, bei dem der Querschnitt der säulenförmigen Elemente (22) am oberen Ende (22b) größer ist als am unteren Ende (22a), wobei der Durchmesser am unteren Ende (22a) der säulenförmigen Elemente (22) insbesondere kleiner als 500 nm, vorzugsweise kleiner als 200 nm und besonders vorzugsweise kleiner als 100 nm ist und/oder
bei dem der Querschnitt der säulenförmigen Elemente (22) am oberen Ende (22b) größer ist als am unteren Ende (22a), wobei die säulenförmigen Elemente (22) vorzugsweise die Form eines auf dem schmalen Ende stehenden Kegelstumpfes haben, dessen halber Öffnungswinkel, definiert als Winkel zwischen Kegelachse und Mantellinie, 0,1° bis 7°, vorzugsweise 0,5° bis 3° beträgt und/oder
bei dem für die Federkonstante k der säulenförmigen Elemente (22) gilt:

$$k = \frac{F}{\Delta x} \leq 10\ mN/m,\ \text{vorzugsweise}\ \leq 1\ mN/m,$$

wobei $\Delta x$ die Auslenkung des oberen Endes (22b) der säulenförmigen Elemente (22) in horizontaler Richtung und F eine horizontale Kraft ist, die am oberen Ende (22b) der säulenförmigen Elemente (22) angreift und/oder
bei dem das Substrat (25) und die säulenförmigen Elemente (22) aus einem Festkörpermaterial, insbesondere kristallinem, polykristallinem oder amorphem Festkörpermaterial bestehen, das vorzugsweise durch ein Metall oder ein Halbleitermaterial gebildet wird und/oder
bei dem das Festkörpermaterial GaAs, SiN, Si oder $SiO_2$ ist, und/oder bei dem das Festkörpermaterial biokompatibel ist oder die Oberfläche des Substrates (25) und/oder der säulenförmigen Elemente (22) zumindest teilweise behandelt oder beschichtet ist, um eine Biokompatibilität herzustellen.

10. Verfahren nach einem der Ansprüche 2 bis 9, bei dem die Länge der säulenförmigen Elemente (22) zwischen 3 $\mu$m und 15 $\mu$m, vorzugsweise zwischen 4 $\mu$m und 12 $\mu$m und besonders vorzugsweise zwischen 4 $\mu$m und 10$\mu$m beträgt und/oder
bei dem die säulenförmigen Elemente (22) in einer rechteckigen oder hexagonalen Gitterstruktur auf dem Substrat (25) angeordnet sind, wobei die Differenz aus Gitterkonstante des Gitters und dem Querschnitt der säulenförmigen Elemente (22) am unteren Ende (22a) vorzugsweise zwischen 1$\mu$m und 10 $\mu$m beträgt und/oder bei dem die Anzahl der säulenförmigen Elemente (22) mindestens 100, vorzugsweise mindestens 1000, besonders vorzugsweise mindestens 5000 und insbesondere mindestens 10000 beträgt.

11. Vorrichtung zur Detektion der Auslenkung einer Mehrzahl elastischer Elemente (22) eines Sensors (24), die gegen eine Rückstellkraft aus einer Ruhelage auslenkbar sind und die periodisch angeordnet sind, wobei die Vorrichtung Folgendes umfasst:

- eine Aufnahme (28) zum Aufnehmen eines Sensors (24),
- eine Lichtquelle (30), die so angeordnet oder anordenbar ist, dass sie einen in oder auf der Aufnahme (28) angeordneten Sensor (24) derart beleuchten kann, dass durch an den elastischen Elementen (22) gestreutes Licht ein Beugungsbild erzeugt wird,
- einen optischen Sensor (32), insbesondere Bildsensor, der geeignet ist, zumindest einen Teil des Beugungsbildes oder eines Bildes, welches durch Wechselwirkung des Beugungsbildes mit weiteren optischen Komponenten erzeugt wurde, zu empfangen, und
- eine Steuerung (36), die geeignet ist, aus dem empfangenen Bild oder Bildteil Informationen bezüglich des Auslenkungszustandes der elastischen Elemente (22) des Sensors (24) zu ermitteln.

12. Vorrichtung nach Anspruch 11, bei der die Steuerung (36) dazu eingerichtet ist, die Intensität von mindestens einem Bragg-Reflex mindestens erster Ordnung zu ermitteln und daraus die mittlere Auslenkung der elastischen Elemente (22) abzuschätzen, wobei die Steuerung (36) vorzugsweise dazu eingerichtet ist, anhand der mittleren Auslenkung die Aktivität und/oder Vitalität von Zellen zu bestimmen.

13. Vorrichtung nach Anspruch 11, bei der die Steuerung (36) dazu eingerichtet ist, anhand der mittleren Auslenkung der elastischen Elemente (22) mindestens eine Resonanz von Schwingungen elastischer Elemente (22) zu detektieren, wobei die Steuerung (36) vorzugsweise dazu eingerichtet ist, anhand der mindestens einen Resonanz zu ermitteln, ob und/oder in welchem Umfang Partikel an den elastischen Elementen (22) angelagert sind und/oder wobei die Steuerung (36) dazu ausgelegt ist, mindestens eine Resonanzfrequenz zu detektieren und anhand der mindestens einen Resonanzfrequenz die Masse von angelagerten Partikeln zu ermitteln oder
bei der die genannte weitere optische Komponente eine Fourier-Optik umfasst, die angeordnet ist, um das Beugungsbild in ein reelles Bild der Anordnung elastischer Elemente (22) umzuwandeln.

14. Einrichtung zum Ermitteln von Zellkräften oder Kräften von Kleinsttieren, die folgendes umfasst:

einen Zellkraftsensor (24), der eine Mehrzahl säulenförmiger Elemente (22) umfasst, die jeweils an ihrem unteren Ende (22a) an einem Substrat (25) befestigt sind und ein oberes freies Ende (22b) haben, und
eine Vorrichtung (26) zur Detektion der Auslenkung der säulenförmigen Elemente (22) nach einem der Ansprüche 11 bis 13.

15. Einrichtung zur Detektion der Masse und/oder Konzentration von Partikeln, die folgendes umfasst:

einen Massesensor (24), der eine Mehrzahl säulenförmiger Elemente (22) umfasst, die jeweils an ihrem unteren Ende (22a) an einem Substrat (25) befestigt sind und ein oberes freies Ende (22b) haben, wobei die oberen Enden (22b) der Säulen (22) zur Anlagerung von zu detektierenden Partikeln geeignet oder funktionalisiert sind, und
eine Vorrichtung (26) zur Detektion der Auslenkung der säulenförmigen Elemente (22) nach einem der Ansprüche 11 bis 13.

## Claims

1. A method for detecting the deflection of a plurality of elastic elements (22), wherein

- the elastic elements (22) can be deflected out of a rest position against a restoring force and
- the elastic elements (22) are arranged periodically,

**characterised in that** the arrangement of the elastic elements (22) is illuminated using light, the coherence length of which is larger than the average spacing of adjacent elastic elements (22),
a diffraction image is generated of the illuminating light scattered by the arrangement of elastic elements (22),
at least a portion of the diffraction image is detected by an optical sensor (32) directly or after interaction with further optical components, and
the detected image or measurement signal is analysed further in order to determine information relating to the deflection state of the elastic elements (22) therefrom.

2. The method according to Claim 1, in which
the elastic elements (2) are suitable as resonators and/or for measuring a force acting on a respective elastic element (22), and in which preferably

- the elastic elements (22) are formed by column-like elements, which are each fastened with a lower end (22a) on a substrate (25) and have an upper free end (22b), and
- said diffraction image is formed by the light scattered on the upper ends (22b) of the column-like elements (22).

3. The method according to Claim 1 or 2, in which the intensity of at least one Bragg reflection of at least first order is determined and used to estimate the average deflection of the elastic elements (22), wherein
the average deflection of the elastic elements (22) is preferably estimated in order to detect at least one resonance of vibrations of elastic elements (22), wherein
whether and/or to what extent particles are deposited on the elastic elements (22) is preferably determined on the basis of the at least one resonance, wherein
the elastic elements (22) are preferably coated at least in certain sections with a material, on which predetermined particles may selectively deposit.

4. The method according to one of the preceding claims, in which the deflection takes place due to resonant excitation.

5. The method according to Claim 2, 3 or 4, in which biological cells (10) or small organisms are located on or between the column-like elements (22), and in which the average deflection is preferably estimated in order to determine the activity and/or vitality of the cells (10) or small organisms, wherein
the activity and/or vitality is preferably determined in response to the addition of a medium, particularly a medicine.

6. The method according to Claim 2, in which whether and/or to what extent particles are deposited on the upper ends (22b) of the column-like elements (22) is determined on the basis of the at least one resonance, wherein at least the end face (22c) of the upper ends (22b) of the column-like elements (22) is preferably coated with a material, on which predetermined particles may selectively deposit.

7. The method according to one of Claims 3 to 6, in which at least one resonant frequency is detected, and the mass of deposited particles is determined on the basis of the at least one detected resonant frequency.

8. The method according to Claim 1, 2 or 4, in which the diffraction image of at least first order is transformed with the aid of a Fourier optical system into an image of the arrangement of elastic elements (22).

9. The method according to one of Claims 2 to 8, in which the cross section of the column-like elements (22) is larger at the upper end (22b) than at the lower end (22a), wherein the diameter at the lower end (22a) of the column-like elements (22) is in particular smaller than 500 nm, preferably smaller than 200 nm and particularly preferably smaller than 100 nm, and/or
in which the cross section of the column-like elements (22) is larger at the upper end (22b) than at the lower end (22a), wherein the column-like elements (22) preferably have the shape of a truncated cone standing on the narrow end, the half opening angle of which, defined as the angle between the cone axis and enveloping line, is between 0.1° and 7°, preferably between 0.5° and 3°, and/or
in which the following applies for the spring constant k of the column-like elements (22):

$$k = \frac{F}{\Delta x} \leq 10 \ mN/m, \text{ preferably} \leq 1 \ mN/m,$$

wherein $\Delta x$ is the deflection of the upper end (22b) of the column-like elements (22) in the horizontal direction and F is a horizontal force which acts on the upper end (22b) of the column-like elements (22), and/or
in which the substrate (25) and the column-like elements (22) consist of a solid-state material, particularly crystalline, polycrystalline or amorphous solid-state material, which is preferably formed by a metal or a semiconductor material, and/or
in which the solid-state material is GaAs, SiN, Si or $SiO_2$, and/or
in which the solid-state material is biocompatible or the surface of the substrate (25) and/or the column-like elements (22) is treated or coated at least to some extent, in order to create biocompatibility.

10. The method according to one of Claims 2 to 9, in which the length of the column-like elements (22) is between 3 $\mu$m and 15 $\mu$m, preferably between 4 $\mu$m and 12 $\mu$m and particularly preferably between 4 $\mu$m and 10 $\mu$m, and/or
in which the column-like elements (22) are arranged in a rectangular or hexagonal lattice structure on the substrate (25), wherein the difference of lattice constant of the lattice and the cross section of the column-like elements (22) at the lower end (22a) is preferably between 1 $\mu$m and 10 $\mu$m, and/or
in which the number of column-like elements (22) is at least 100, preferably at least 1000, particularly preferably at least 5000 and in particular at least 10000.

11. A device for detecting the deflection of a plurality of elastic elements (22) of a sensor (24), which can be deflected out of a rest position against a restoring force, said device comprising:

- a receptacle (28) for accommodating a sensor (24),
- a light source (30), which is or can be arranged such that it can illuminate a sensor (24) arranged in or on the receptacle (28) in such a manner that a diffraction image is created by light scattered at the elastic elements (22),
- an optical sensor (32), particularly an image sensor, which is suitable for receiving at least a portion of the diffraction image or an image which was produced by interaction of the diffraction image with further optical components, and
- a control (36) which is suitable for determining information relating to the deflection state of the elastic elements (22) of the sensor (24) from the received image or image portion.

12. The device according to Claim 11, in which the control (36) is configured to determine the intensity of at least one Bragg reflection of at least first order and estimate the average deflection of the elastic elements (22) therefrom, wherein

the control (36) is preferably configured to determine the activity and/or vitality of cells on the basis of the average deflection.

13. The device according to Claim 11, in which the control (36) is configured to detect at least one resonance of vibrations of elastic elements (22) on the basis of the average deflection of the elastic elements (22), wherein

the control (36) is preferably configured to determine whether and/or to what extent particles are deposited on the elastic elements (22) on the basis of the at least one resonance, and/or wherein

the control (36) is designed to detect at least one resonant frequency and to determine the mass of deposited particles on the basis of the at least one resonant frequency, and/or wherein

said further optical component comprises a Fourier optical system which is arranged to convert the diffraction image into a real image of the arrangement of elastic elements (22).

14. An apparatus for determining cell forces or forces of small organisms, comprising:

a cell force sensor (24) which comprises a plurality of column-like elements (22) each fastened at their lower end (22a) on a substrate (25) and having an upper free end (22b), and

a device (26) for detecting the deflection of the column-like elements (22) according to one of Claims 11 to 13.

15. An apparatus for determining the mass and/or concentration of particles, comprising:

a mass sensor (24) comprising a plurality of column-like elements (22), each fastened at their lower end (22a) on a substrate (25) and having an upper free end (22b), wherein the upper ends (22b) of the columns (22) are suitable or functionalised for the deposition of particles to be detected, and

a device (26) for detecting the deflection of the column-like elements (22) according to one of Claims 11 to 13.

## Revendications

1. Procédé pour détecter la déviation d'une pluralité d'éléments élastiques (22),

- les éléments élastiques (22) pouvant être déviés hors de leur position de repos à l'encontre d'une force de rappel, et
- les éléments élastiques (22) étant disposés périodiquement,

**caractérisé en ce que** le système d'éléments élastiques (22) est éclairé par une lumière dont la longueur de cohérence est supérieure à la distance moyenne entre des éléments élastiques (22) adjacents,

une figure de diffraction de la lumière d'éclairage, diffusée au niveau du système d'éléments élastiques (22), est générée,

au moins une partie de la figure de diffraction est détectée par un capteur optique (32) directement ou après interaction avec d'autres composants optiques, et la figure détectée ou le signal de mesure est analysé encore pour y déterminer des informations sur l'état de déviation des éléments élastiques (22).

**2.** Procédé selon la revendication 1, dans lequel les éléments élastiques (22) sont adaptés sous forme de résonateurs et/ou sont adaptés à mesurer une force agissant sur un élément élastique (22) respectif, et dans lequel, de préférence,

- les éléments élastiques (22) sont formés par des éléments en forme de colonnes, qui sont fixées chacune par une extrémité inférieure (22a) à un substrat (25) et ont une extrémité supérieure (22b) libre, et
- ladite figure de diffraction est formée par la lumière diffusée au niveau des extrémités supérieures (22b) des éléments (22) en forme de colonnes.

**3.** Procédé selon la revendication 1 ou 2, dans lequel l'intensité est déterminée par au moins une réflexion de Bragg du premier ordre au moins et est utilisée pour évaluer la déviation moyenne des éléments élastiques (22), la déviation moyenne des éléments élastiques (22) étant évaluée, de préférence, pour détecter au moins une résonance des oscillations des éléments élastiques (22), à l'appui de ladite au moins une résonance étant déterminé, de préférence, si et/ou dabs quelle ampleur des particules sont fixées sur les éléments élastiques (22), lesdits éléments élastiques (22) étant revêtus, de préférence, au moins par zones par un matériau sur lequel des particules prédéterminées se fixent sélectivement.

**4.** Procédé selon l'une quelconque des revendications précédentes, dans lequel la déviation est due à une excitation résonante.

**5.** Procédé selon la revendication 2, 3 ou 4, dans lequel des cellules biologiques (10) ou des animalcules se situent sur ou entre les éléments (22) en forme de colonnes, et dans lequel la déviation moyenne est évaluée, de préférence, pour déterminer l'activité et/ou la vitalité des cellules (10) ou des animalcules, l'activité et/ou la vitalité étant déterminées de préférence en réponse à l'ajout d'une substance, en particulier un médicament.

**6.** Procédé selon la revendication 2, dans lequel à l'appui de ladite au moins une résonance, il est déterminé si et/ou dans quelle ampleur des particules se sont fixées sur les extrémités supérieures (22b) des éléments (22) en forme de colonnes, au moins la face frontale (22c) des extrémités supérieures (22b) des éléments (22) en forme de colonnes étant revêtue de préférence d'un matériau sur lequel des particules prédéterminées se fixent sélectivement.

**7.** Procédé selon l'une quelconque des revendications 3 à 6, dans lequel au moins une fréquence de résonance est détectée, et la masse des particules fixées est déterminée à l'appui de ladite au moins une fréquence de résonance détectée.

**8.** Procédé selon la revendication 1, 2 ou 4, dans lequel la figure de diffraction du premier ordre au moins est transformée au moyen d'une optique de Fourier en une image du système d'éléments élastiques (22).

**9.** Procédé selon l'une quelconque des revendications 2 à 8, dans lequel la section transversale des éléments (22) en forme de colonnes est plus grande au niveau de l'extrémité supérieure (22b) qu'au niveau de l'extrémité inférieure (22a), le diamètre à l'extrémité inférieure (22a) des éléments (22) en forme de colonnes étant en particulier inférieur à 500 nm, de préférence inférieur à 200 nm et de manière particulièrement préférée inférieur à 100 nm, et/ou dans lequel la section transversale des éléments (22) en forme de colonnes est plus grande au niveau de l'extrémité supérieure (22b) qu'au niveau de l'extrémité inférieure (22a), les éléments (22) en forme de colonnes ayant de préférence la forme d'un cône tronqué posé sur son extrémité étroite, dont le demi-angle d'ouverture, défini comme angle entre l'axe du cône et la ligne d'enveloppe, mesure de 0,1° à 7°, de préférence de 0,5° à 3°, et/ou dans lequel pour la constante de ressort k des éléments (22) en forme de colonnes, on applique

$$k = \frac{F}{\Delta x} \leq 10\ mN/m, \text{ de préférence } \leq 1\ mN/m$$

$\Delta x$ étant la déviation de l'extrémité supérieure (22b) des éléments (22) en forme de colonnes dans la direction horizontale et F étant une force horizontale qui s'exerce sur l'extrémité supérieure (22b) des éléments (22) en forme de colonnes, et/ou dans lequel le substrat (25) et les éléments (22) en forme de colonnes sont réalisés dans un matériau solide, en particulier un matériau solide cristallin, polycristallin ou amorphe, lequel est formé de préférence par un métal ou un matériau semi-conducteur, et/ou

dans lequel le matériau solide est GaAs, SiN, Si ou SiO$_2$, et/ou
dans lequel le matériau solide est biocompatible ou la surface du substrat (25) et/ou des éléments (22) en forme de colonnes est traitée ou revêtue au moins partiellement pour générer la biocompatibilité.

10. Procédé selon l'une quelconque des revendications 2 à 9, dans lequel la longueur des éléments (22) en forme de colonnes mesure entre 3 μm et 15 μm, de préférence entre 4 μm et 12 μm et de manière particulièrement préférée entre 4 μm et 10 μm, et/ou
dans lequel les éléments (22) en forme de colonnes sont disposés sur le substrat (25) selon une structure de réseau rectangulaire ou hexagonale, la différence formée à partir de la constante du réseau et de la section transversale des éléments (22) en forme de colonnes au niveau de l'extrémité inférieure (22a) se situe, de préférence, entre 1 μm et 10 μm, et/ou
dans lequel le nombre d'éléments (22) en forme de colonnes est au moins 100, de préférence au moins 1 000, de manière particulièrement préférée au moins 5 000 et en particulier au moins 10 000.

11. Dispositif pour détecter la déviation d'une pluralité d'éléments élastiques (22) d'un capteur (24), qui peuvent être déviés hors d'une position de repos à l'encontre d'une force de rappel et qui sont disposés périodiquement, le dispositif comportant les éléments suivants :

- un logement (28) destiné à recevoir un capteur (24),
- une source lumineuse (30), qui est disposée ou peut être disposée de telle sorte qu'elle peut éclairer un capteur (24), disposé dans ou sur le logement (28), de manière à générer une figure de diffraction sous l'effet de la lumière diffusée au niveau des éléments élastiques (22),
- un capteur optique (32), en particulier un capteur d'image, qui est adapté à capter au moins une partie de la figure de diffraction ou d'une image qui a été générée sous l'effet de l'interaction de la figure de diffraction avec d'autres composants optiques, et
- une commande (36), qui est adaptée à déterminer, à partir de l'image ou de la partie d'image captée, des informations sur l'état de déviation des éléments élastiques (22) du capteur (24).

12. Dispositif selon la revendication 11, dans lequel la commande (36) est configurée pour déterminer l'intensité d'au moins une réflexion de Bragg du premier ordre au moins et d'évaluer à partir de celle-ci la déviation moyenne des éléments élastiques (22),
la commande (36) étant configurée de préférence pour déterminer l'activité et/ou la vitalité des cellules à partir de la déviation moyenne.

13. Dispositif selon la revendication 11, dans lequel la commande (36) est configurée pour détecter, à partir de la déviation moyenne des éléments élastiques (22), au moins une résonance des oscillations des éléments élastiques (22), la commande (36) étant configurée de préférence pour déterminer, à l'appui de ladite au moins une résonance, si et/ ou dans quelle ampleur des particules sont fixées sur les éléments élastiques (22), et/ou
la commande (36) étant configurée pour détecter au moins une fréquence de résonance et pour déterminer, à l'appui de ladite au moins une fréquence de résonance, la masse des particules fixées, ou
dans lequel ledit autre composant optique comporte une optique de Fourier qui est disposée pour transformer la figure de diffraction en une image réelle du système d'éléments (22) en forme de colonnes.

14. Système pour déterminer les forces des cellules ou les forces des animalcules, lequel comporte les éléments suivants :

un capteur de force des cellules (24) qui comporte une pluralité d'éléments (22) en forme de colonnes qui sont fixées chacune par son extrémité inférieure (22a) sur un substrat (25) et ont une extrémité supérieure (22b) libre, et
un dispositif (26) pour détecter la déviation des éléments (22) en forme de colonnes selon l'une des revendications 11 à 13.

15. Système pour détecter la masse et/ou la concentration de particules, lequel comporte les éléments suivants :

un capteur de masse (24) qui comporte une pluralité d'éléments (22) en forme de colonnes qui sont fixés chacun par son extrémité inférieure (22a) sur un substrat (25) et ont une extrémité supérieure (22b) libre, les extrémités supérieures (22b) des colonnes (22) étant adaptées ou fonctionnalisées pour fixer les particules à détecter, et
un dispositif (26) pour détecter la déviation des éléments (22) en forme de colonnes selon l'une des revendi-

cations 11 à 13.

Fig. 1(a)

Fig. 1(b)

Fig. 2

(a)

(b)

(c)

Fig. 3

Fig. 4

Fig. 5

Fig. 6

Fig. 7

Fig. 8

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **K. JENSEN.** An atomic-resolution nanome-chanical mass sensor. *Nature Nanotechnology,* 2008, vol. 3, 533
- **S. VASHIST ; A. ZOJONO.** A Review of Micro-cantilevers for Sensing Applications. *Medical News TODAY,* 24. Juni 2007
- **ROURE et al.** Force mapping in epithelial cell migration. *Proceedings of the National Academy of Sciences of the United States of America,* 2005, vol. 102 (7), 2390-2395